# EUROPÄISCHE PATENTSCHRIFT

(11) **EP 1 431 511 B1**
(45) Veröffentlichungstag und Bekanntmachung des Hinweises auf die Patenterteilung: **30.08.2006**
(21) Anmeldenummer: 03029354.2
(22) Anmeldetag: 19.12.2003
(51) Int. Cl.: E21B 10/58, B23B 51/02

(54) **Gesteinsbohrer**
Rock drill
Foret à roche

(30) Priorität: 19.12.2002 DE 10260112; 23.05.2003 DE 10323798; 23.05.2003 DE 10323799
(43) Veröffentlichungstag der Anmeldung: 23.06.2004
(73) Patentinhaber: ROBERT BOSCH GMBH, 70442 Stuttgart (DE)
(72) Erfinder: Moser, Bernhard, 88361 Altshausen (DE)
(74) Vertreter: Eisele, Otten, Roth & Dobler

(56) Entgegenhaltungen:
- EP-A- 0 761 927
- EP-A- 1 136 161
- DE-A- 4 301 708
- DE-A- 19 650 487
- DE-A- 19 724 373
- DE-U- 29 901 285
- FR-A- 986 125

## Beschreibung

Die Erfindung betrifft einen Gesteinsbohrer nach dem Oberbegriff des Anspruchs 1.

### Stand der Technik:

Gesteinsbohrer werden z.B. in Hammerbohrmaschinen eingesetzt und benötigen zum Abtrag von Gestein einen Bohrerkopf, der z.B. Hartmetall-Schneidelemente aufweist. Diese Schneidelemente können z.B. in Form von Hartmetall-Schneidplatten ausgebildet sein, die in Aufnahmenuten des Bohrkopfes eingelötet sind (DE 38 20 695 C2). Je nach Anzahl der Schneiden der Hartmetall-Schneidelemente unterscheidet man zwischen zwei- oder mehrschneidigen Bohrern. Die genannte DE 38 20 695 C2 weist neben einer Hauptschneidplatte mit zwei Schneiden eine zusätzliche Nebenschneidplatte auf, die in einer separaten Aufnahmenut eingebettet ist.

Aus der EP 0 937 680 B1 ist ein Gesteinsbohrer bekannt geworden, der um einen mittigen Zentrierstift drei symmetrisch angeordnete Hartmetallplatten aufweist. Ein solcher Drei-Schneider weist im Allgemeinen drei Förderwendelnuten zum Bohrmehltransport auf, was im Allgemeinen nur bei Bohrern mit großem Nenndurchmesser verwendet wird.

Anstelle von mehreren Schneidplatten gemäß dem EP 0 937 860 B1 kann auch eine einstückige sternförmige Schneidplatte verwendet werden, wie dies z.B. in der DE 197 07 115 A1 als einstückiger Hartmetalleinsatz gezeigt ist. Auch hier werden drei Schneiden zum Gesteinsabtrag gebildet. Ein ähnliches Werkzeug ist in der DE 44 06 513 A1 als Drei-Schneider mit zentraler Zentrierspitze gezeigt.

Diesen Bohrwerkzeugen gemeinsam ist eine Anordnung der Hauptschneiden oder Haupt- und Nebenschneiden derart, dass diese im wesentlichen mit ihren Schneidkanten in deren Verlängerung durch die Bohrerlängsachse führen. Hierdurch ergibt sich eine in Draufsicht auf das Bohrwerkzeug weitestgehend symmetrische Anordnung der Schneidkanten.

Es sind auch Bohrwerkzeuge mit einstückigem Vollhartmetallkopf bekannt geworden. Die DE 197 24 373 A1 zeigt einen solchen Vollhartmetallkopf, der mit seiner flachen Unterseite stumpf mit dem Förderwendelschaft verbunden ist. Es entfallen damit die mit Schleifscheiben eingebrachten Aufnahmenuten zur Einbettung von Hartmetall-Schneidplatten. Das genannte Bohrwerkzeug gemäß der DE 197 24 373 A1 weist einen in Draufsicht x-förmigen symmetrischen Aufbau auf mit zumindest zwei voreilende Hauptschneiden und nacheilenden Nebenschneiden. Ein ähnliches Bohrwerkzeug ist in der WO 01/68334 A1 mit Vollhartmetallkopf gezeigt.

Die DE 100 06 936 A1 zeigt einen in Draufsicht x-förmigen Vollhartmetallkopf, der jedoch zum Teil seitlich im Bohrerkopf eingebettet ist.

Aus der FR 986 125 A (gleich AT 164 908) ist eine Bohrkrone mit Hartmetallschneiden bekannt geworden, die vielseitig geformte Aufnahmenuten für Hartmetall-Schneiden im Bohrerkopf aufweisen. Diese Nuten sind grundsätzlich mit Hartmetallplatten bestückt, die seitenparallele Wände aufweisen.

Das Dokument EP 0 761 927 zeigt eine herkömmliche Hartmetallschneidplatte mit seitenparallelen Wänden zum Einsatz in einen Hartmetallbohrer.

Ein Bohrerkopf mit mehreren Schneiden hat den Vorteil, dass die mit diesem Bohrerkopf herzustellenden Bohrlöcher einen eher kreisrunden Querschnitt aufweisen. Weist das Bohrwerkzeug nur eine, sich über dem Bohrerkopfquerschnitt erstreckende Hartmetall-Schneidplatte auf, so sind die hiermit hergestellten Bohrlöcher in ihrer Geometrie eher unrund, da das Bohrwerkzeug nur an zwei außen liegenden Seiten der Hartmetall-Schneidplatte gegenüber dem Bohrloch abgestützt ist. Bohrlöcher, welche mit solchen Bohrwerkzeugen hergestellt sind, müssen, um Normdübel aufnehmen zu können, mit einem Bohrwerkzeug größeren Durchmessers gebohrt werden, um die unrunde Geometrie des Bohrlochs auszugleichen. Bei einem Dreischneider oder Vierschneider wird das Bohrwerkzeug entsprechend stärker abgestützt, so dass sich rundere Bohrlöcher herstellen lassen.

Die Anordnung von symmetrischen Schneiden, d.h. Schneiden mit Schneidkanten, die in ihrer Verlängerung durch die Bohrerlängsachse führen, haben weiterhin den Nachteil, dass ein ungleichmäßiger Abtrag des Bohrlochs dadurch entsteht, dass die Schneidkanten aufgrund der schlagenden und drehenden Bewegung immer wieder in gleiche Kerben des Bohrlochs einschlagen. Hierdurch verringert sich die Vorschubleistung eines solchen Bohrwerkzeugs.

Die Anordnung von mehreren Schneidplatten zur Erzielung eines Mehrschneiders hat darüber hinaus den Nachteil, dass mehrere Aufnahmenuten in dem Bohrerkopf eingebracht werden müssen, die zum einen Platzbedarf haben und zum andern den Bohrerkopf in seiner Festigkeit schwächen. Mehrstückige Hartmetall-Einsätze müssen darüber hinaus bei der Herstellung, d.h. für den Einlötvorgang aufwendig fixiert und entsprechend gehalten werden.

### Aufgabe der Erfindung:

Der Erfindung liegt die Aufgabe zugrunde, die genannten Nachteile beim Stand der Technik zu vermeiden und insbesondere ein Bohrwerkzeug zu schaffen, welches im Herstellungsprozess stark vereinfacht und damit billiger ist. Darüber hinaus soll das Bohrwerkzeug zur Herstellung von sehr runden Bohrlöchern geeignet sein. Schließlich soll die Konstruktion eines geeigneten Hartmetall-Schneideinsatzes den Herstellungsvorgang vereinfachen und eine erhöhte und verbesserte Bohrleistung erbringen.

### Lösung und Vorteile der Erfindung:

Diese Aufgabe wird ausgehend von einem Gesteinsbohrer nach dem Oberbegriff des Anspruchs 1 durch die kennzeichnenden Merkmale des Anspruchs 1 gelöst.

In den Unteransprüchen sind vorteilhafte und zweckmäßige Weiterbildungen des Gesteinsbohrers gemäß Anspruch 1 angegeben.

Der Erfindung liegt der Kerngedanke zugrunde, dass ein einstückiger Hartmetalleinsatz in eine entsprechend einfach geformte Aufnahmenut im Bohrerkopf einzusetzen ist. Dabei wird mittels einer in Draufsicht auf die Stirnseite des Bohrerkopfes trapezförmigen Aufnahmenut im Bohrerkopf ein Aufnahmeraum für einen in Draufsicht etwa trapezförmigen Schneideinsatz gebildet. Die Herstellung der Aufnahmenut kann in einem besonders einfachen Herstellungsprozess mittels einer Schleifscheibe erfolgen, die durch eine Verkippung der Schleifscheibe einen entsprechenden trapezförmigen Schlitz in den Bohrerkopf einbringen kann. Mit anderen Worten ausgedrückt bedeutet dies, dass der Bohrerkopf einen Schlitz bzw. eine Nut mit zwei nicht parallel verlaufenden Seiten aufweist, wobei diese v-artig aufeinander zu laufen. Hierdurch kann ein äußerst schlankes und einstückiges Hartmetall-Schneidelement verwendet werden, welches nicht wesentlich größer ist als eine Hartmetall-Schneidplatte eines Zweischneiders. Der Aufbau eines solchen Hartmetall-Schneideinsatzes kann aufgrund der in Draufsicht trapezförmigen Fläche derart erfolgen, dass beispielsweise drei Schneiden gebildet sind. Hierdurch ergibt sich eine verbesserte Herstellung eines kreisrunden Querschnitts des Bohrloches. Somit ist es möglich, auch mit einem Gesteinsbohrer, welcher gegenüber den aus dem Stand der Technik bekannten Dreischneidern einfach herzustellen ist, im Querschnitt kreisrunde Bohrlöcher herzustellen. Diese qualitativ hochwertigen Bohrlöcher erlauben dann auch die Verwendung von Normdübeln, ohne dass mit einem den ellipsenähnlichen Querschnitt des Bohrlochs berücksichtigenden Gesteinsbohrer mit Übermaß gebohrt werden muss.

Mittels der einfachen Herstellung der Aufnahmenut als trapezförmige Nut kann auf den Einsatz z.B. eines Nebenschneidelements mit gesonderter Nut verzichtet werden, so dass der Bohrerkopf noch schlanker und damit mit besseren Vorschubeigenschaften ausgebildet werden kann. Dabei entfällt der aufwendige Herstellungsvorgang eines vollhartmetall-Bohrerkopfes mit einem stumpfen Anschweißen des Vollhartmetallkopfes, da das in Draufsicht trapezförmige Schneidelement in herkömmlicher Weise im Bohrerkopf in den entsprechend ausgebildeten Aufnahmeschlitz eingelötet werden kann.

Die Ausbildung von zwei Hauptschneiden und einer eventuell vorgesehenen Nebenschneide wird durch die trapezförmige Ausbildung des Schneidelements bewirkt.

Anstelle eines in Draufsicht trapezförmigen Schneidelements kann dieses auch in Draufsicht x-förmig ausgebildet sein, wobei jedoch eine asymmetrische Anordnung vorgesehen ist. Hier sind zwei mit ihrer schmalen Grundseite sich berührende Trapeze aneinandergesetzt, wobei die schmalen Trapezseiten seitlich von der Bohrerlängsachse zur Herstellung der Asymmetrie angeordnet sind. Eine solche Formgebung ermöglicht ebenfalls einen einfachen Einschnitt in den Bohrerkopf mittels einer Schleifscheibe. Zur Herstellung der x-förmigen Aufnahmenut für das Schneidelement, wird die Schleifscheibe auf den schmalen Trapezseiten um einen Winkel verdreht. Die Breite der aneinander stoßenden Grundseiten der bildet etwa die Breite der Schleifscheibe. Die x-förmige Aufnahmenut ist somit durch zwei Schlitze bzw. Nuten mit nicht parallelen Seiten gebildet, welche auf dem Bohrerkopf außerhalb der Längsachse des Bohrers ineinander übergehen, wobei die beiden Schlitze in ihrer v-artigen Ausbildung gegeneinander gerichtet sind.

In den Unteransprüchen sind vorteilhafte Weiterbildungen wie folgt vorgesehen.

Gemäß der Weiterbildung nach Unteranspruch 2 wird bei einem trapezförmigen Schneidelement das Verhältnis der Seitenkanten bestimmt. Dabei wird ein Verhältnis der Öffnungsbreiten des Schlitzes von etwa 1,5- bis 3fach gewählt, wobei die breitere Öffnung vorzugsweise das Doppelte der schmaleren Öffnung beträgt. Die Schleifscheibe wird deshalb in ihrer Anordnung beim Herstellungsprozess derart versetzt, dass sich eine doppelte Öffnungsbreite des Schlitzes auf der anderen Seite des Aufnahmeschlitzes ergibt. Dementsprechend weist ein in Draufsicht trapezförmiges Schneidelement eine kleinere Grundseite und eine 1,5 bis 3mal größere zweite Grundseite auf, die vorzugsweise doppelt so groß ist. Hierdurch wird ein in der Draufsicht schlanker Hartmetall-Schneideinsatz gebildet.

Die Tiefe der mittels der Schleifscheibe einzubringenden Nut entspricht etwa der Breite der Schleifscheibe, d.h. der Breite der schmaleren Basisseite des in Draufsicht trapezförmigen Schneidelements.

Der in dem Bohrerkopf einzubringende Ausschnitt entspricht weitestgehend der Draufsicht des Schneidelements, welches in an sich bekannter Weise in die Aufnahmenut eingelötet wird.

Das Schneidelement weist mit seiner in Draufsicht trapezförmigen Kontur zwei diametral gegenüberliegende Hauptschneiden mit zugehörigen Schneidkanten auf, die in ihrer Verlängerung vorzugsweise nicht in Richtung Bohrerlängsachse, sondern versetzt hierzu verlaufen. Dies hat zur Folge, dass ein Schlagbild erzeugt wird, welches asymmetrisch ausgebildet ist, so dass ein besserer Abtrag im Bohrloch erzielt wird. Neben den Hauptschneiden weist das Schneidelement eine Nebenschneide auf, die vorzugsweise auf demselben Hüllkegel wie die Hauptschneiden liegt. Die Nebenschneide befindet sich gegenüberliegend zur ersten Hauptschneide im breiteren Teil der in Draufsicht trapezförmigen Kontur. Die Nebenschneide kann wahlweise auch als Schneidspitze ausgebildet sein.

Zur Erzielung einer guten Zentriereigenschaft des Bohrwerkzeugs weist das Schneidelement eine Zentrierspitze auf, die sich axial gegenüber den Hauptschneidkanten hervorhebt. Die Zentrierspitze weist ihrerseits jeweils zwei Schneidflächen mit Schneidkanten und dahinter liegenden Freiflächen auf, wobei die Schneidkanten zwischen sich eine verkürzte Querschneide bilden. Die Länge der Querschneide kann bis auf den Betrag null verkürzt werden, um eine optimale Zentriereigenschaft zu erhalten.

Das erfindungsgemäße Bohrwerkzeug ist damit kostengünstig in der Fertigung bei gleichzeitig stark reduziertem HartmetallEinsatz gegenüber einem 4- oder 3-Schneider herkömmlicher Bauart. Trotzdem wird eine statisch bestimmte Abstützung im Bohrloch erzielt, was zu runden Bohrlöchern führt. Aufgrund der unsymmetrischen Schneidenanordnung der drei auf gleicher Höhe liegenden Schneiden verlaufen die drei Schneiden nicht durch die Bohrermitte und sind daher weder punkt-, rotationsnoch achssymmetrisch ausgebildet. Hierdurch wird eine Überdeckung der einzelnen Hammerkerben erzielt, d.h. es findet eine gezielte Zerspaltung der im Bohrgrund entstehenden Stege statt. Die Herstellung der Kopfgeometrie mit einfach herzustellender Aufnahmenut für die Aufnahme des Hartmetall-Schneideinsatzes ermöglicht weiterhin ein kombinierbares Spiralisieren der Förderwendel, in Verbindung mit der Herstellung der Kopfgeometrie.

Weitere Vorteile der Erfindung ergeben sich aus der nachfolgenden Beschreibung von Ausführungsbeispielen. Hierbei zeigt:
- Fig. 1:: eine Seitenansicht eines Gesteinsbohrers,
- Fig. 2:: eine perspektivische Ansicht des in Figur 1 gezeigten Gesteinsbohrers,
- Fig. 3a:: eine Seitenansicht des Bohrerkopfes ohne Schneidelement des Gesteinsbohrers aus Figur 1,
- Fig. 3b:: eine Draufsicht auf den in Figur 3a gezeigten Bohrerkopf ohne Schneidelement,
- Fig. 4a:: eine Draufsicht auf einen schematisch dargestellten Bohrerkopf mit einer in Draufsicht trapezförmigen Aufnahmenut,
- Fig. 4b:: eine Draufsicht auf einen schematisch dargestellten Bohrerkopf mit einer in Draufsicht x-förmigen Aufnahmenut,
- Fig. 5a: eine Seitenansicht des Schneidelements des in den Figuren 1 und 2 gezeigten Gesteinbohrers,
- Fig. 5b: eine Draufsicht auf das in Figur 5a dargestellte Schneidelement,
- Fig. 5c: eine Seitenansicht von links des in Figur 5a dargestellten Schneidelements,
- Fig. 5d: eine perspektivische Ansicht des in Figur 5a dargestellten Schneidelements,
- Fig. 6a: eine Draufsicht auf ein schematisch dargestelltes in Draufsicht trapezförmiges Schneidelement,
- Fig. 6b: eine Draufsicht auf ein schematisch dargestelltes in Draufsicht x-förmiges Schneidelement,
- Fig. 7a - 7d:: den Figuren 5a bis 5d entsprechende Ansichten eines zweiten Scheidelements,
- Fig. 8a - 8d:: den Figuren 5a bis 5d entsprechende Ansichten eines dritten Scheidelements,
- Fig. 9a:: eine Draufsicht auf den in den Figuren 1 und 2 gezeigten Gesteinbohrer,
- Fig. 9b:: eine Draufsicht auf den in den Figuren 1 und 2 gezeigten Gesteinbohrer ohne Darstellung der Förderwendel,
- Fig. 10a - 10c:: drei weitere Seitenansichten des in Figur 1 dargestellten Gesteinbohrers,
- Fig. 11:: eine schematische Darstellung eines Bohrerkopfes in Draufsicht und
- Fig. 12a - 12d:: eine schematische Darstellung der Herstellung einer in Draufsicht trapezförmigen Aufnahmenut an einem Bohrerkopf.

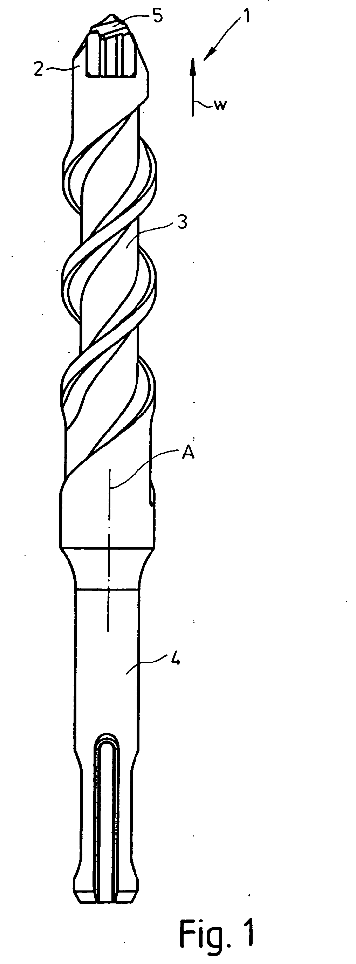

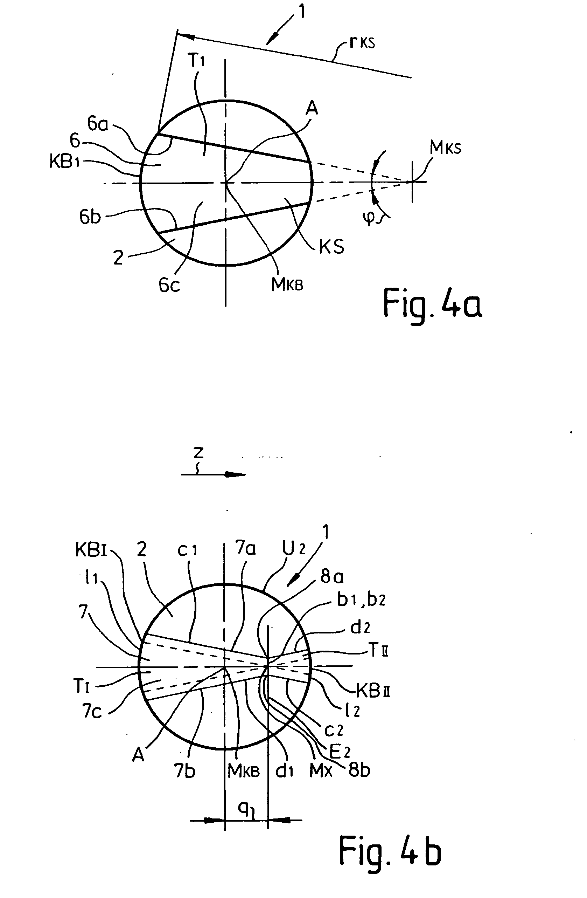

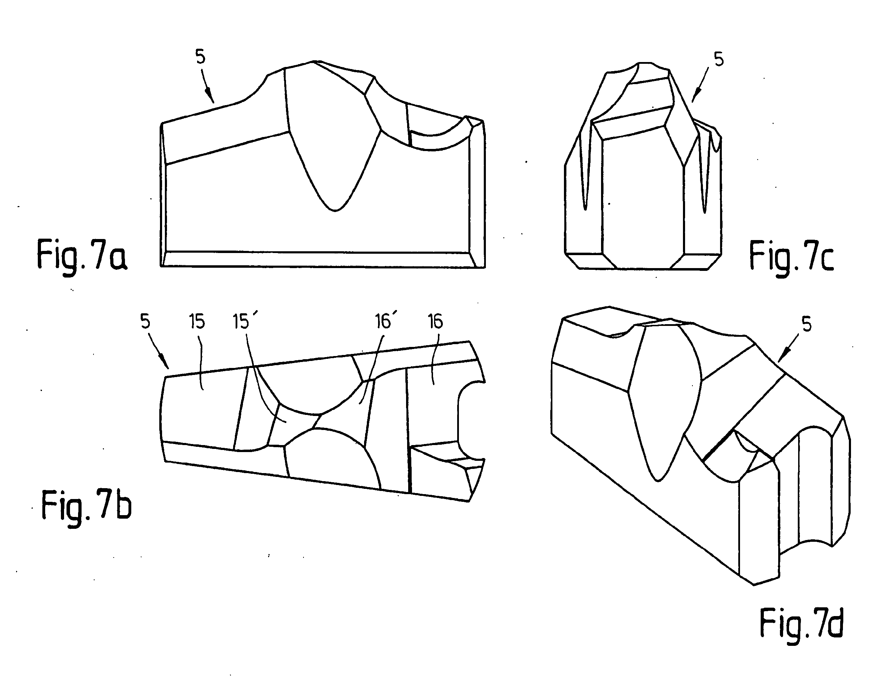

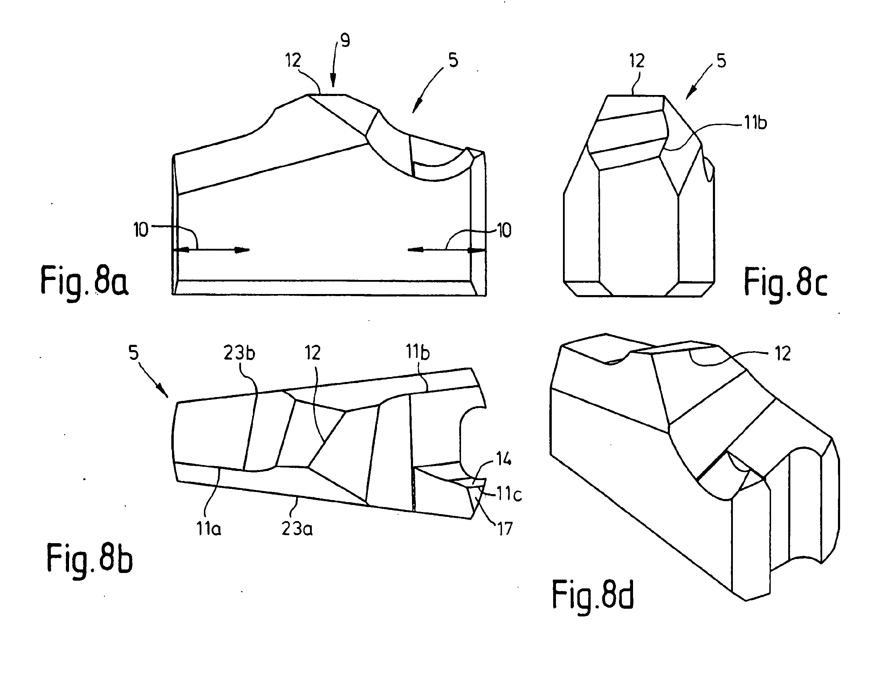

In den Figuren 1, 2, 3a, 3b, 5a bis 5d, 9a, 9b und 10a bis 10c ist der selbe Gesteinsbohrer bzw. dessen Einzelteile in verschiedenen Ansichten dargestellt. Die Figuren 7a bis 7d und 8a bis 8d zeigen zwei Varianten eines Schneidelements. Die Figuren 4a, 4b, 6a, 6b, 11 und 12a bis 12d enthalten schematische Darstellungen zu dem erfindungsgemäßen Gesteinsbohrer bzw. zu dessen Herstellung.

In Figur 1 ist ein Gesteinsbohrer 1 dargestellt. Dieser weist einen Bohrerkopf 2, eine sich hieran anschließende zweigängige Förderwendel 3 sowie einen Einspannschaft 4 auf. Im Bohrerkopf 2 ist ein Schneidelement 5 aus Hartmetall oder dergleichen eingebettet. Der Einspannschaft 4 ist als sogenannter SDS-Plus-Einspannschaft ausgebildet. Der Gesteinsbohrer 1 weist eine Längsachse A auf.

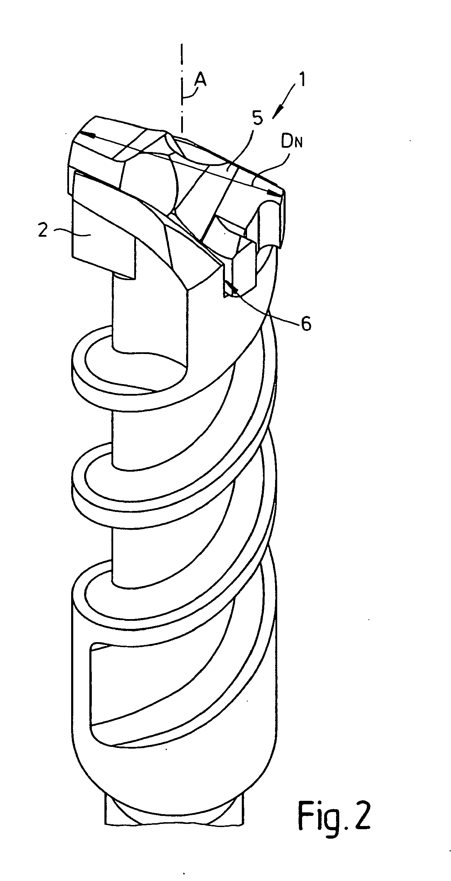

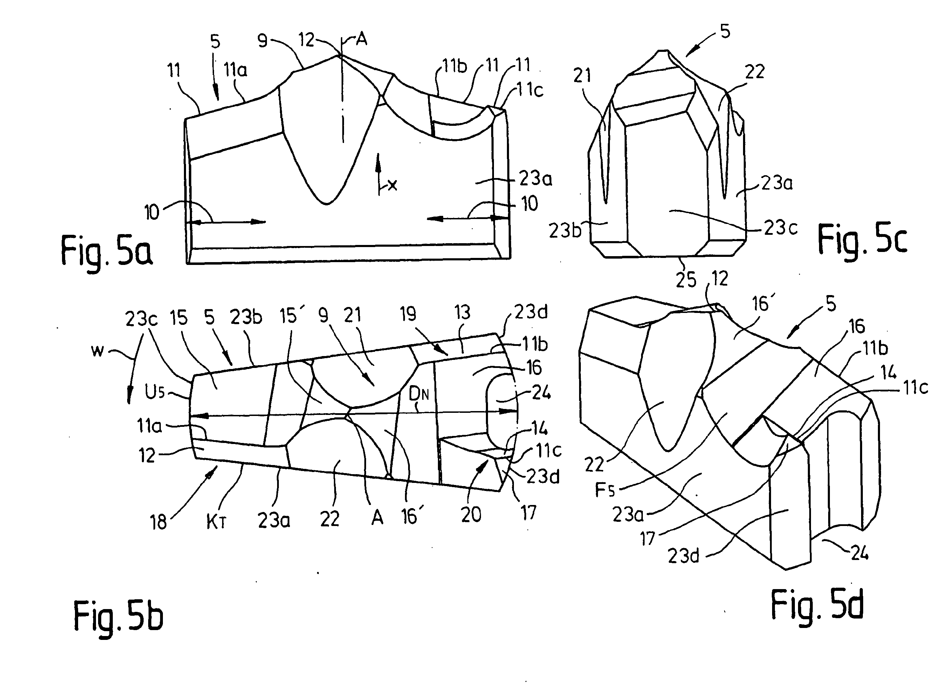

Die Figur 2 zeigt den in Figur 1 dargestellten Gesteinsbohrer 1 in perspektivischer Ansicht. Das Schneidelement 5 ist in eine im dem Bohrerkopf 2 angeordnete Aufnahmenut 6 eingelötet und definiert einen Nenndurchmesser D_{N} des Gesteinsbohrers 1. Der Nenndurchmesser D_{N} definiert einen Umkreis U₅ (siehe Figur 5b) um das Schneidelement 5.

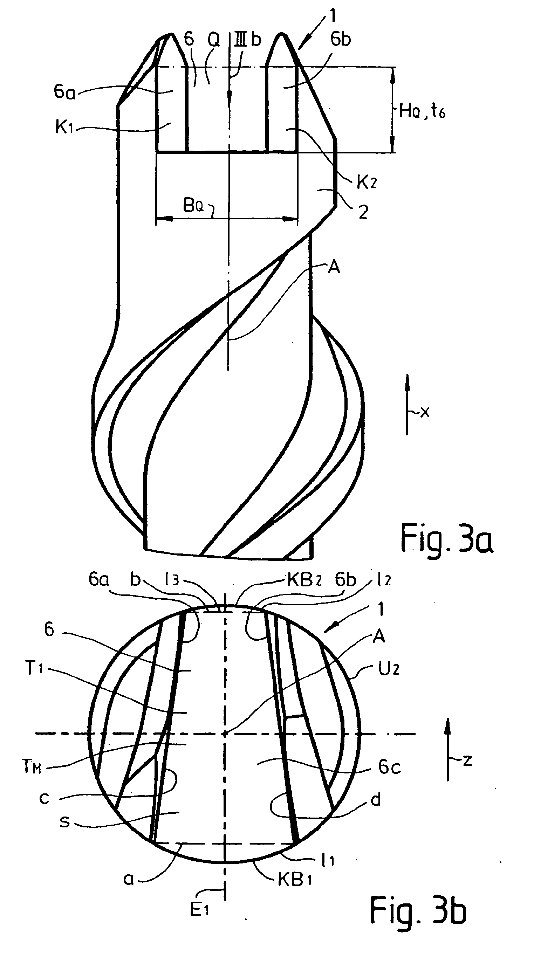

Die Figur 3a zeigt im wesentlichen eine der Darstellung in Figur 1 entsprechende Seitenansicht des Bohrerkopfes 2 des Gesteinsbohrers 1 ohne das Schneidelement. Die zur Aufnahme des Schneidelements vorgesehene Aufnahmenut 6 besitzt einen rechteckigen Querschnitt Q, welcher sich in Abhängigkeit von der Lage der Schnittebene in der Höhe H_{Q} und in der Breite B_{Q} ändert. Die Höhe H_{Q} ist gleichzeitig auch das Maß für eine Tiefe t₆ der Aufnahmenut 6. Grundsätzlich gilt für den in Figur 3a dargestellten Gesteinsbohrer 1, dass die Breite B_{Q} in die Zeichnungsebene hinein (siehe Pfeilrichtung z in Figur 3b) abnimmt und die Höhe H_{Q} in die Zeichnungsebene hinein bis etwa zur Längsachse A in eine Wirkrichtung x des Gesteinsbohrers 1 zunimmt und anschließend wieder abnimmt.

Die Figur 3b zeigt eine Draufsicht auf eine Stirnseite S des in Figur 3a dargestellten Gesteinsbohrers 1 ohne Schneidelement 5 aus einer Pfeilrichtung IIIb. In der Draufsicht weist die Aufnahmenut 6 ein trapezförmiges Aussehen auf. Hierbei bilden Seitenwände 6a, 6b (siehe auch Figur 3a) der Aufnahmenut 6 Schenkel c, d einer trapezähnlichen Fläche T₁. Grundlinien a, b eines Trapezes T_{M} im mathematischen Sinne sind bei der Fläche T₁ durch einen langen Kreisbogen KB₁ einer Länge 1₁ und einen kurzen Kreisbogen KB₂ einer Länge l₂ ersetzt, welche auf einem Umkreis U₂ des Bohrerkopfes 2 liegen. Die Grundlinie b des Trapezes T_{M} bildet eine Sekante zu dem Kreisbogen KB₂ und weist eine Länge l₃ auf. Ein Nutgrund 6c entspricht genau der Fläche T₁. Die trapezähnliche Fläche T₁ ist gleichschenklig und symmetrisch zu einer Spiegelebene E₁ ausgebildet, in welcher die Längsachse A des Gesteinsbohrers 1 liegt. Die Seitenwände 6a, 6b bilden ebene Flächen K₁ und K₂.

Die Figur 4a zeigt in schematischer Darstellung eine Draufsicht auf einen Bohrerkopf 2 eines Gesteinsbohrers 1 mit einer Längsachse A bei nicht eingesetztem Schneidelement, welcher dem in Figur 1 gezeigten Gesteinbohrer ähnlich ist. Eine zur Halterung des Schneidelements vorgesehene Aufnahmenut 6 prägt das Erscheinungsbild des Bohrerkopfes 2. In ihrer Verlängerung schneiden sich Seitenwände 6a, 6b der Aufnamenut 6 in einem Punkt M_{KS} und bilden in Draufsicht einen v-förmigen Ausschnitt bzw. einen Kreissektor KS, welcher durch einen Radius r_{KS} und einen Öffnungswinkel ϕ definiert ist. Ein Nutgrund 6c der Aufnahmenut 6 bildet einen Teil der Fläche des Kreissektors KS. Abweichend von der exakten Definition eines Kreissektors ist der Kreissektor KS durch einen Kreisbogen KB₁ begrenzt, welcher als Mittelpunkt M_{KB} die Längsachse A des Gesteinsbohrers 1 aufweist und nicht den Mittelpunkt M_{KS}, in welchem sich die Verlängerungen der Seitenwände 6a, 6b schneiden. Anders ausgedrückt weist die Aufnahmenut 6 in Draufsicht eine trapezähnliche Fläche T₁ auf.

Die Figur 4b zeigt in schematischer Darstellung eine Draufsicht auf einen weiteren Bohrerkopf 2 eines Gesteinsbohrers 1 mit einer Längsachse A bei nicht eingesetztem Schneidelement. Dieser Bohrerkopf 2 weist eine in Draufsicht etwa x-förmige Aufnahmenut 7 auf. Die Aufnahmenut 7 ist durch zwei gleichschenklige trapezähnliche Flächen T_{I} und T_{II} gebildet, welche Grundlinien b₁, b₂ gleicher Länge und Schenkel c₁, d₁ bzw. c₂, d₂ aufweisen, welche in gleichen Winkeln zu den Grundlinien b₁, b₂ stehen, wobei die Grundlinien b₁, b₂ die Längsachse A des Gesteinsbohrers 1 nicht schneiden. Statt durch weitere Grundlinien sind die trapezähnlichen Flächen T_{I}, T_{II} durch Kreisbögen KB_{I}, KB_{II} unterschiedlicher Längen l₁, 1₂ begrenzt, welche auf einem Umkreis U₂ des Bohrerkopfes 2 liegen. Die Aufnahmenut 7 besitzt somit Seitenwände 7a, 7b auf, welche in Draufsicht im Bereich der Grundlinien b₁, b₂ jeweils einen Knick 8a, 8b aufweisen. Die Aufnahmenut 7 besitzt also einen Nutgrund 7c, welcher in Draufsicht durch ein X gebildet ist, bei welchem auch der Zwischenraum zwischen den Schenkeln zur Aufnahmenut 7 gehört. In eine Pfeilrichtung z betrachtet verjüngt sich die Aufnahmenut 7 im Querschnitt bis zu einer Ebene E₂ und erweitert sich anschließend wieder. Anders ausgedrückt entsteht die Aufnahmenut 7 durch eine Spiegelung der trapezähnlichen Fläche T_{I} an der Ebene E₂, wobei die Ebene E₂ parallel zu Längsachse A liegt, aber diese nicht schneidet. Die x-förmige Aufnahmenut 7 weist einen Mittelpunkt M_{X} auf, welcher in einem Abstand q zu einem durch die Längsachse A des Gesteinsbohrers 1 definierten Mittelpunkt M_{KB} des Bohrerkopfes 2 liegt.

Die Figuren 5a bis 5d zeigen das aus den Figuren 1 und 2 bekannte Scheidelement 5 in unterschiedlichen Ansichten in Alleinstellung. Die Figur 5a zeigt eine Seitenansicht des Schneidelements 5. Zur Längsachse A des Gesteinsbohrers bzw. des Schneidelements 5 hin weist das Scheidelement 5 einen spitzenartigen Verlauf auf und bildet eine Art Zentrierspitze 9. In einem außerhalb der Zentrierspitze liegenden Umfangsbereich 10 weist das Schneidelement 5 drei Schneidkanten 11 auf, welche als erste Hauptscheidkante 11a, zweite Hauptscheidkante 11b und Nebenschneidkante 11c ausgebildet sind. Die Hauptschneidkanten 11a, 11b verlaufen im Umfangsbereich 10 dachförmig und gerade etwa parallel zu Seitenflächen 23a, 23b (siehe auch Figur 5b). Zur Zentrierspitze 9 hin steigen die Hauptschneiden 11a, 11b dann bogenförmig an und verlaufen anschließend etwa im gleichen Winkel wie im Umfangsbereich 10 auf die Längsachse A zu, um kurz davor in eine Querschneide 12 überzugehen. Die Nebenschneide 11c verläuft lediglich im äußeren Bereich des Umfangbereichs 10 und weist dort etwa ein Drittel der Länge der Hauptschneiden 11a, 11b auf. Gemäß einer nicht dargestellten Ausführungsvariante ist es vorgesehen, die Nebenschneide etwa über den gesamten Umfangsbereich 10 verlaufen zu lassen. Eine weitere Ausführungsvariante sieht vor, das Schneidelement ohne Zentrierspitze vollständig dachförmig auszubilden, so dass die Schneidkanten mit etwa konstanter Steigung verlaufen.

In der Figur 5b ist das Schneidelement 5 in Draufsicht dargestellt. Im Bohrbetrieb dreht sich das in den Gesteinsbohrer eingelötete Schneidelement 5 in eine Pfeilrichtung w. Den Schneidkanten 11a bis 11c sind im Umfangsbereich 10 (siehe Figur 5a) Schneidflächen 12, 13, 14 und Freiflächen 15, 16, 17 zugeordnet. Die Schneidkante 11a bildet mit der Schneidfläche 12 und der Freifläche 15 eine erste Hauptschneide 18. Die Schneidkante 11b bildet mit der Schneidfläche 13 und der Freifläche 16 eine zweite Hauptschneide 19. Die Schneidkante 11c bildet mit der Schneidfläche 14 und der Freifläche 17 eine Nebenschneide 20. Zwischen der Freifläche 15 der ersten Hauptschneide 18 und der Schneidfläche 13 der zweiten Hauptschneide 19 ist eine konkave Ausbuchtung 21 angeordnet, welcher eine weitere konkave Ausbuchtung 22 gegenüberliegt. Die konkaven Ausbuchtungen 21, 22 bilden seitliche Flanken der Zentrierspitze 9, welche in die Pfeilrichtung x betrachtet (siehe Figur 5a) unterhalb der Schneidkanten 11a, 11b liegen. Weiterhin ist die Zentrierspitze 9 durch Flächen 15' und 16' gebildet, welche Fortsetzungen der Freiflächen 15, 16 sind. Das Schneidelement 5 weist die Seitenflächen 23a, 23b auf, welche parallel zu den Seitenwänden 6a, 6b der Aufnahmenut 6 des Gesteinsbohrers verlaufen (siehe auch Figur 3a, 3b). Außerdem ist das Schneidelement 5 seitlich durch eine gewölbte Seitenfläche 23c und eine gewölbte Seitenfläche 23d begrenzt. Die Seitenfläche 23d weist einen Rücksprung 24 auf. In Draufsicht ist der Verlauf der gewölbten Seitenflächen 23c, 23d durch einen Umkreis U₅ des Schneidelements 5 mit dem Durchmesser D_{N} definiert. Insgesamt weist das Schneidelement 5 somit eine trapezähnliche Außenkontur K_{T} auf. Gemäß einer nicht dargestellten Ausführungsvariante ist es vorgesehen, die Seitenfläche 23d analog zu der Seitenfläche 23c ohne Rücksprung 24 auszuführen. Im Umfangsbereich 10 verlaufen die Hauptscheidkanten 11a, 11b jeweils etwa parallel zu den Seitenfläche 23a, 23b des Schneidelements 5. Gemäß einer weiteren nicht dargestellten Ausführungsvariante ist es vorgesehen, die Seitenfläche 23c, 23d als ebene, ungewölbte Flächen auszuführen, so dass das die Kontur des Schneidelements in Draufsicht exakt einem gleichschenkligen Trapez entspricht.

In Figur 5c ist das Schneidelement 5 in einer weiteren Seitenansicht dargestellt. Der Betrachter blickt auf die Seitenfläche 23c. In dieser Ansicht auf das sich in die Zeichnungsebene hinein verbreiternde Schneidelement 5 sind auch die Seitenflächen 23a und 23b sichtbar, in welche die konkaven Ausbuchtungen 21, 22 in Richtung eines Bodens 25 des Schneidelements 5 tief eintauchen.

Die Figur 5d zeigt eine perspektivische Ansicht des Schneidelements 5. Eine schraffiert gekennzeichnete Fläche F₅, welche im wesentlichen durch die Flächen 16 und 16' definiert ist, verläuft in unterschiedliche Richtungen gewölbt bzw. durchgebogen zwischen der Hauptschneidkante 11b, der Querschneide 12, der Ausbuchtung 22, der Seitenfläche 23a, der Seitenfläche 23d, der Freifläche 17, der Spanfläche 14 und dem Rücksprung 24. Die innerhalb dieser Fläche F₅ liegenden Kanten deuten lediglich Übergänge zwischen unterschiedlich geformten Teilflächen an.

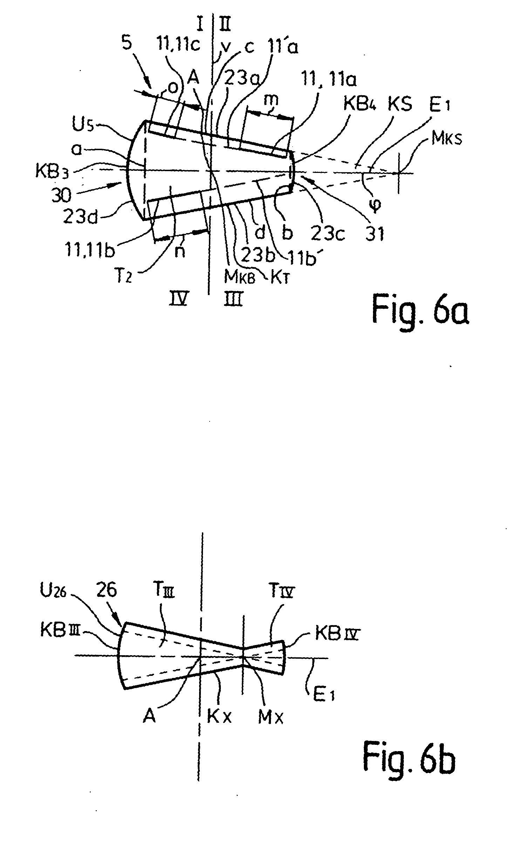

Die Figuren 6a und 6b zeigen schematisch dargestellte Schneidelemente in Draufsicht. In der Figur 6a ist ein Schneidelement 5 dargestellt, welches beispielsweise für den Einsatz in die in Figur 4a dargestellte Aufnahmenut 6 vorgesehen ist und eine der Längsachse des Bohrers entsprechende Längsachse A aufweist. Das Schneidelement 5 weist zwei gerade Seitenflächen 23a, 23b, und zwei gewölbte Seitenflächen 23c, 23d auf. Die Seitenflächen 23a, 23b verlaufen parallel zu den Seitenflächen 6a, 6b der in Figur 4a dargestellten Aufnahmenut 6 und bilden Schenkel c, d einer trapezähnlichen Fläche T₂, wobei Grundlinien a, b durch Kreisbögen KB₃ und KB₄ ersetzt sind. Die Kreisbögen liegen auf einem Umkreis U₅ um das Schneidelement 5, welcher seinen Mittelpunkt M_{KB} auf der Längsachse A hat. Das Schneidelement 5 ist somit in Draufsicht auf die Aufnahmenut 6 (siehe Figur 4a) angepasst und kann ebenso wie diese auch als Teil eines Kreissektors KS beschrieben werden, dessen Kreismittelpunkt M_{KS} durch die sich schneidenden Verlängerungen der Seitenflächen 23a und 23b bestimmt ist. Für das Verhältnis der Umkreise gilt, dass der Umkreis U₅ des Schneidelements 5 größer ist als der Umkreis U₂ des Bohrerkopfs 2 (siehe auch Figur 4a). Das in Draufsicht keilförmige Schneidelement 5 ist durch ein den Mittelpunkt M_{KB} schneidendes Fadenkreuz in vier Quadranten I bis IV geteilt. In den Quadranten I, II, IV ist jeweils eine Schneide 11 angeordnet. Ein breites Ende 30 der trapezähnlichen Fläche T₂ ist in den Quadranten I und IV angeordnet und weist eine Hauptschneide 11b und eine Nebenschneide 11c mit Längen n und o auf. Ein schmales Ende 31 des Schneidelements 5 ist in den Quadranten II und III angeordnet und weist im Quadrant II eine Hauptschneide 11a mit einer Länge m auf. Bei einer Spiegelung der Hauptscheide 11a an Achsen v und u des Fadenkreuzes kommt diese etwa auf der Hauptschneide 11b zu liegen. Die Nebenschneide 11c liegt etwa auf einer Verlängerung 11a' der Hauptschneide 11a, wobei die Verlängerung 11a' die Längsachse A nicht schneidet. Auch eine Verlängerung 11b' der Hauptschneide 11b läuft an der Längsachse A vorbei. Das Schneidelement 5 ist mit einer Kontur K_{T} spiegelsymmetrisch zu einer Längsmittelebene E₁ ausgebildet.

Die Figur 6b zeigt eine schematische Darstellung eines Schneidelements 26 mit einer in Draufsicht x-förmigen Außenkontur K_{X}, welches für den Einsatz in die Aufnahmenut 7 des in Figur 4b gezeigten Gesteinsbohrers 1 bestimmt ist. Das Schneidelement 26 ist in Draufsicht entsprechend der x-förmigen Aufnahmenut 7 (siehe Figur 4b) ausgebildet. Im Unterschied zu dieser sind zwei Trapeze T_{III}, T_{IV}, aus welchen das Schneidelement 26 zusammengesetzt ist, durch Kreisbögen KB_{III}, KB_{IV} begrenzt. Die Kreisbögen liegen auf einem Umkreis U₂₆ des Schneidelements 26. Auch bei dieser Ausführungsvariante gilt, dass der Umkreis U₂₆ des Schneidelements 26 größer ist als der Umkreis U₂ des Bohrerkopfes 2 (siehe Figur 4b). Das Schneidelement 26 ist symmetrisch zu einer Ebene E₁ ausgebildet. Gemäß einer nicht dargestellten Ausführungsvariante ist auch eine asymmetrische Ausführung des Schneidelements vorgesehen.

Die Figuren 7a bis 7d zeigen eine Ausführungsvariante für ein Schneidelement 5. Das Schneidelement 5 weist große Ähnlichkeiten zu dem in den Figuren 5a bis 5d gezeigten Schneidelement auf. Im Unterschied zu diesem sind Flächen 15, 15' und 16, 16' anders gewölbt bzw. begrenzt.

Die Figuren 8a bis 8d zeigen eine weitere Ausführungsvariante für ein Schneidelement 5. Das Schneidelement 5 weist Ähnlichkeiten zu dem in den Figuren 5a bis 5d gezeigten Schneidelement auf. Im Unterschied zu diesem ist eine Querschneide 12 wesentlich länger ausgebildet, was zu einer flacheren Ausbildung einer Zentrierspitze 9 führt bzw. durch in einem Umfangsbereich 10 verlaufende Hauptschneiden 11a, 11b bedingt ist, welche in den zentrischen Bereich 9 hinein weiterhin etwa parallel zu Seitenflächen 23a, 23b des Schneidelements 5 verlaufen. Eine Nebenschneide 11c mit zugehöriger Spanfläche 14 und Freifläche 17 ist vergleichbar mit der in den Figuren 5a bis 5d gezeigten Nebenschneide ausgebildet.

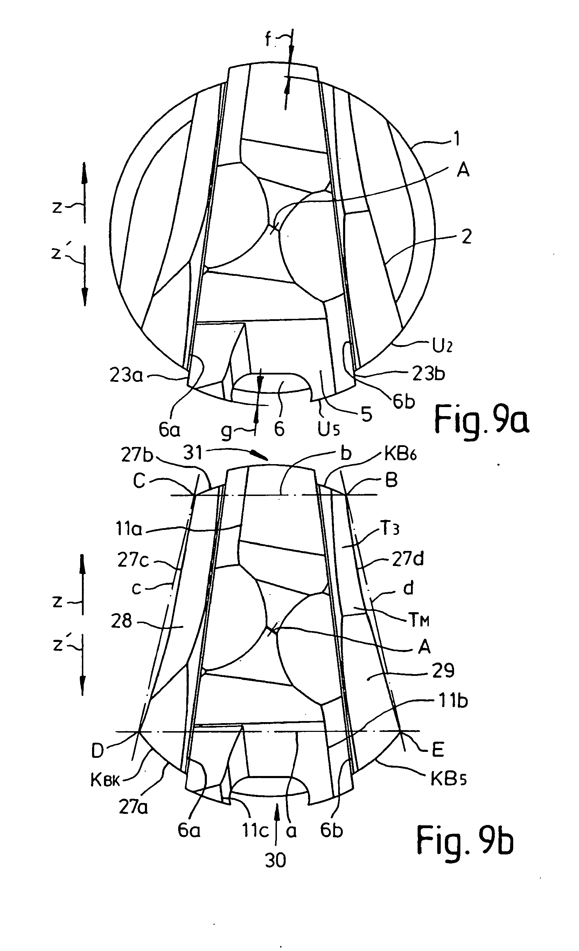

Die Figur 9a zeigt den in Figur 1a dargestellten Gesteinsbohrer 1 in Draufsicht. Das in Draufsicht trapezförmige Schneidelement 5 ist mit seinen Seitenflächen 23a, 23b zwischen den Seitenwänden 6a, 6b der Aufnahmenut 6 eingebettet und so auf die Längsachse A des Gesteinbohrers 1 ausgerichtet, dass es über dem Umkreis U₂ des Bohrerkopfes 2 in die Pfeilrichtung z und eine der Pfeilrichtung z entgegen orientierte Richtung z' jeweils um gleich große Überstände f, g übersteht. Das heißt, der Umkreis U₂ und der Umkreis U₅ des Schneidelements 5 weisen gemeinsame Mittelpunkte auf, welche auf der Längsachse A liegen.

Figur 9b zeigt ebenfalls eine Draufsicht auf den in der Figur 1a dargestellten Gesteinsbohrer 1, wobei in der Draufsicht lediglich das Scheidelement 5 und der Bohrerkopf 2 dargestellt sind und auf eine Darstellung der Förderwendel 3 bzw. des Einspannschaftes 4 verzichtet wurde. Der Bohrerkopf 2 weist ähnlich wie die Aufnahmenut 6 und das Schneidelement 5 in Draufsicht ein trapezähnliches Aussehen bzw. eine trapezähnliche Kontur K_{BK} auf. Durch eine Verbindung der Eckpunkte B, C, D, E ist ein Trapez T_{M} mit Grundlinien a, b und Schenkeln c, d gebildet. Die trapezähnliche Kontur K_{BK} bzw. die trapezähnliche Fläche T₃ entsteht durch das Ersetzen der Grundlinien a, b durch Kreisbögen KB₅ und KB₆, welche auf dem Umkreis U₂ des Bohrerkopfes 2 liegen und etwas länger sind als die Kreisbögen KB₁ und KB₂, welche die Aufnahmenut 6 begrenzen (siehe auch Figur 3b). Die Kreisbögen KB₅ und KB₆ beschreiben in Draufsicht den Verlauf von Seitenflächen 27a und 27b des Bohrerkopfes 2. Zu Schenkeln c und d hin ist die trapezähnliche Fläche T₃ durch Seitenflächen 27c und 27d des Bohrerkopfes 2 gebildet, welche zu der Längsachse A hin leicht durchgebogen sind. Zwischen der Seitenwand 6a der Aufnahmenut 6 und der Seitenwand 27c des Bohrerkopfes 2 und zwischen der Seitenwand 6b der Aufnahmenut 6 und der Seitenwand 27d des Bohrerkopfes 2 ist jeweils eine Rippe 28 bzw. 29 gebildet, welche das Schneidelement 5 seitlich einbettet und abstützt. Im Verhältnis zu der Breite des Schneidelements 5, quer zur Pfeilrichtung z in der Zeichnungsebene gemessen, beträgt die Breite der Rippen, ebenfalls quer zur Pfeilrichtung z in der Zeichnungsebene gemessen, jeweils etwa ein Drittel der Breite des Schneidelements. Charakteristisch für die Breite der Rippen 28, 29 des Bohrerkopfes 2 ist es, dass diese ebenso wie das Schneidelement in die Pfeilrichtung z' zunimmt. Somit ist das Schneidelement 5 in einem breiten Endbereich, in welchem es die zwei Schneidkanten 11b und 11c aufweist durch stärkere Rippen 28, 29 abgestützt als in einem schmalen Endbereich 31, in welchem das Schneidelement 5 nur die eine Schneidkante 11a aufweist.

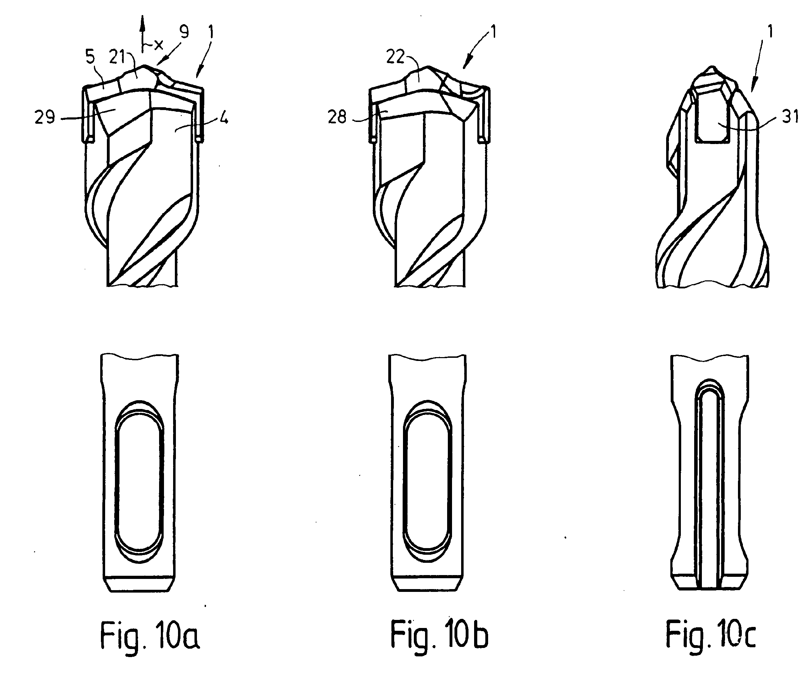

Die Figuren 10a bis 10c zeigen den in Figur 1 dargestellten Gesteinsbohrer in drei weiteren Seitenansichten. Die Figur 10a zeigt den Gesteinsbohrer 1 in einer Stellung, in welcher dieser ausgehend von Figur 1 um 90° nach links gedreht ist. Die Rippe 29 des Bohrerkopfes 4 ist in die Pfeilrichtung x zur Zentrierspitze 9 des Bohrers hin hochgezogen und verdeckt teilweise die konkave Ausbuchtung 29. Gemäß einer nicht dargestellten Ausführungsvariante ist es vorgesehen die Rippe 29 im Bereich der Ausbuchtung 29 zu der Ausbuchtung 29 hin plastisch zu verformen und so das Schneidelement 5 formschlüssig in den Bohrerkopf 4 einzubinden. Ergänzend kann es vorgesehen sein auch die Rippe 28 des Bohrerkopfes 4 zu der Ausbuchtung 22 hin plastisch zu verformen, um das Schneidelement von zwei Seiten formschlüssig zu halten (siehe hierzu auch Figur 10b). Die Figur 10b zeigt den Gesteinsbohrer 1 in einer gegenüber der Darstellung in Figur 10a um 180° gedrehten Seitenansicht. Die Figur 10c zeigt schließlich den Gesteinsbohrer 1 in einer gegenüber der Darstellung in Figur 1 um 180° gedrehten Ansicht. In dieser Ansicht ist das schmale Ende 31 des Schneidelements 5 zu sehen.

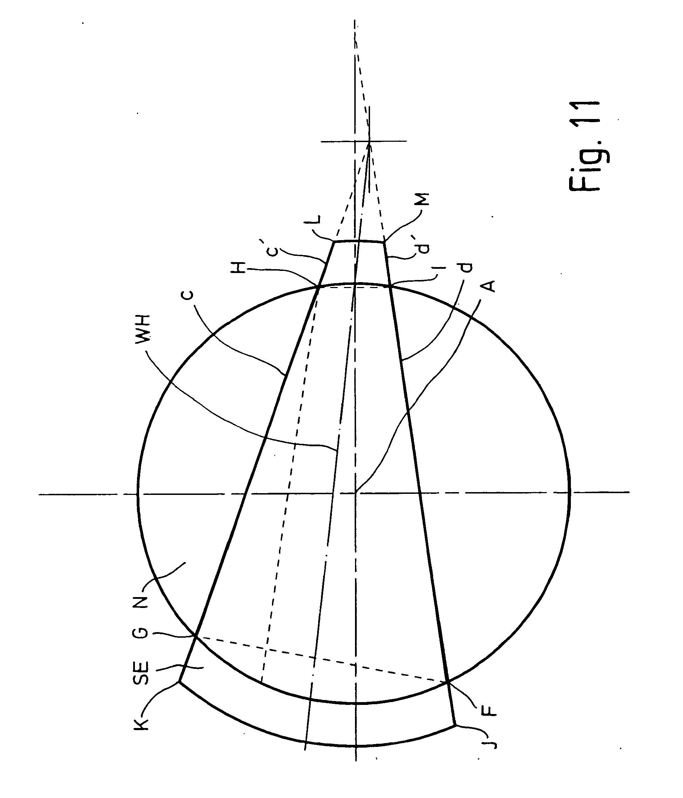

Die Figur 11 zeigt eine weitere Draufsicht auf einen Bohrerkopf 2 mit einem Schneideelement 5 in schematischer Ansicht. Eckpunkte J, K, L, M definieren ein Schneidelement SE. Eine Aufnahmenut N ist durch Eckpunkte F, G, H, I definiert. Im Unterschied zu den in den vorhergehenden Figuren gezeigten Aufnahmenuten und Schneidelementen sind die Aufnahmenut N und das Schneidelement SE durch zwei Schenkel c, d bzw. c', d' begrenzt deren Winkelhalbierende WH eine Längsachse A nicht schneidet. In Draufsicht weisen die Aufnahmenut N bzw. das Schneidelement SE ungleichschenklige, trapezähnliche Flächen auf.

Die Figuren 12a bis 12d zeigen schematisch die Herstellung einer trapezförmigen Aufnahmenut 6. Sämtlich Ansichten zeigen die Draufsicht auf einen Bohrerkopf 2 eines Gesteinsbohrers 1, welcher mit einer Schleifscheibe 32 bearbeitet wird, die in Pfeilrichtungen p₁, p₂, p₃ über den Bohrerkopf 2 geführt wird. Die Schleifscheibe weist eine Breite Bₛ auf.

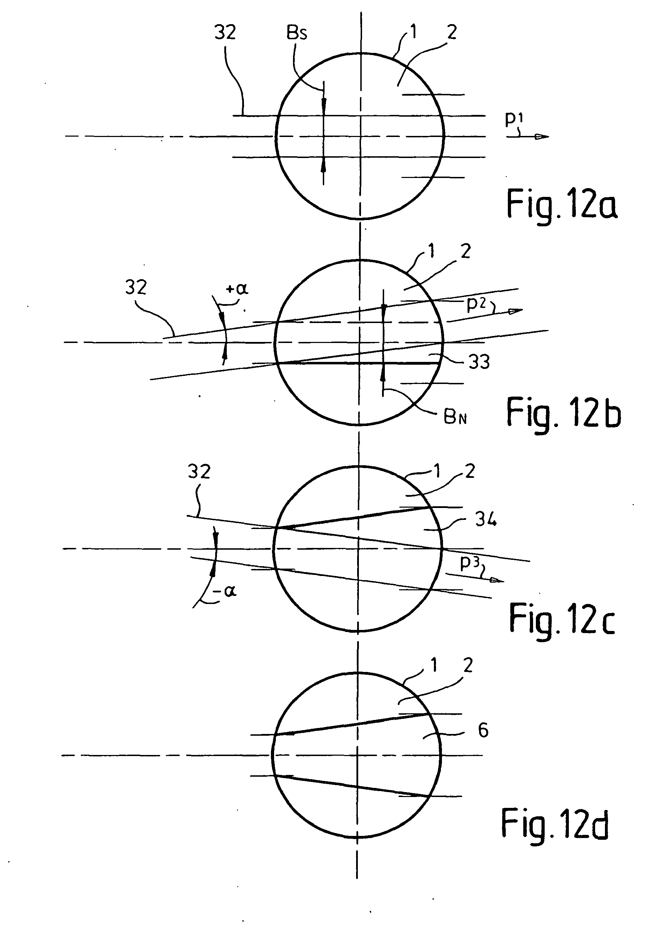

Figur 12 a zeigt wie die Schleifscheibe 32 in der Pfeilrichtung p₁ über den Bohrerkopf 2 geführt wird. Hierbei entsteht eine in Draufsicht etwa rechteckförmige Nut 33 mit einer Breite B_{N} (siehe Figur 12b). Figur 12b zeigt wie die Schleifscheibe 32 den Bohrerkopf 2 in einer um den Winkel +α gegenüber der Pfeilrichtung p₁ gedrehten bzw. gekippten Pfeilrichtung p₂ überfährt und unter Einbeziehung der Nut 33 eine in Draufsicht etwa dreieckförmige Nut 34 (siehe Figur 12c) erzeugt. Figur 12c zeigt wie die Schleifscheibe 32 den Bohrerkopf 2 ein drittes Mal in einer um den Winkel -α gegenüber der Pfeilrichtung p₁ gedrehten Pfeilrichtung p₃ überfährt und aus der bestehenden dreieckförmigen Nut 34 eine gewünschte, in Draufsicht etwa trapezförmige Aufnahmenut 6 (siehe Figur 12d) erzeugt. Figur 12 d zeigt eine Draufsicht auf die fertiggestellte trapezförmige Aufnahmenut 6, welche mit einer einzigen Schleifscheibe 32 herstellbar ist. Somit ist die Aufnahmenut 6 für das Schneidelement durch zwei Bearbeitungsschritte, nämlich das zweimalige Überfahren mit der Schleifscheibe 32 herstellbar.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Gesteinsbohrer
- 2: Bohrerkopf
- 3: Förderwendel
- 4: Einspannschaft
- 5: Schneidelement
- 6: Aufnahmenut
- 6a, 6b: Seitenwand
- 6c: Nutgrund
- 7: Aufnahmenut
- 7a, 7b: Seitenwand
- 7c: Nutgrund
- 8a, 8b: Knick
- 9: zentrierspitze
- 10: Umfangsbereich
- 11: Schneidkante
- 11a: erste Hauptscheidkante
- 11a': Verlängerung von 11a
- 11b: zweite Hauptscheidkante
- 11b': Verlängerung von 11b
- 11c: Nebenschneidkante
- 12: Querschneide
- 12 - 14: Schneidfläche
- 15 - 17: Freifläche
- 15', 16': Fläche
- 18: erste Hauptschneide
- 19: zweite Hauptschneide
- 20: Nebenschneide
- 21, 22: konkave Ausbuchtung
- 23a, 23b: Seitenfläche
- 23c: gewölbte Seitenfläche
- 23d: gewölbte Seitenfläche
- 24: Rücksprung
- 25: Bodens des Schneidelements 5
- 26: x-förmiges Schneidelements
- 27a, 27b: Seitenfläche
- 27c, 27d: Seitenfläche
- 28, 29: Rippe
- 30: breites Ende von 5
- 31: schmales Ende von 5
- 32: Schleifscheibe
- 33: rechteckförmige Nut
- 34: dreieckförmige Nut
- A: Längsachse von 1
- B - E: Eckpunkt
- F - I: Eckpunkt
- J - M: Eckpunkt
- B_{N}: Breite von 34
- B_{Q}: Breite von Q
- B_{S}: Breite von 32
- D_{N}: Nenndurchmesser von 1
- E₁: Spiegelebene
- F₅: Fläche auf 5
- H_{Q}: Höhe von Q
- K₁, K₂: ebene Fläche gebildet durch 6a bzw. 6b
- KB₁, KB₂: Kreisbogen an 6
- KB₃, KB₄: Kreisbogen an 5
- KB₅, KB₆: Kreisbogen an 2
- KB_{I}, KB_{II}: Kreisbogen an 7
- KB_{III}, KB_{IV}: Kreisbogen an 26
- KS: Kreissektor
- K_{BK}: trapezähnliche Kontur von 2
- K_{T}: trapezähnliche Kontur von 5
- K_{X}: x-förmige Kontur von 26
- M_{KB}: Mittelpunkt Kreisbogen
- M_{KS}: Mittelpunkt Kreissektors
- M_{X}: Mittelpunkt von 7 / Kreuzungspunkt
- N: Aufnahmenut
- Q: Querschnitt von 6
- S: Stirnseite von 1 bzw. 2
- SE: Schneidelement
- T_{M}: Trapez
- T₁: trapezähnliche Fläche von 6
- T₂: trapezähnliche Fläche von 5
- T₃: trapezähnliche Fläche von 2
- T_{I}, T_{II}: trapezähnliche Fläche von 7
- T_{III}, T_{IV}: trapezähnliche Fläche von 26
- U₂: Umkreis um 2
- U₅: Umkreis um 5 mit D_{N}
- U₂₆: Umkreis um 26
- WH: Winkelhalbierende
- a, b: Grundlinie
- c, d: Seitenschenkel
- b₁, b₂: Grundlinie
- C₁, C₂: Seitenschenkel
- d₁, d₂: Seitenschenkel
- f, g: Überstand von 5 über 2
- l₁ - l₃: Länge
- m, n, o: Länge von 11a -11c
- q: Abstand
- r_{KS}: Radius von KS
- t₆: Tiefe von 6
- w: Wirkrichtung
- ϕ: Öffnungswinkel von KS
- α: Kippwinkel von 32

## Patentansprüche

1. Gesteinsbohrer (1) mit einem Bohrerkopf (2), einer sich hieran anschließenden ein- oder mehrgängigen Förderwendel (3) sowie einem Einspannschaft (4), wobei in den Bohrerkopf (2) ein Schneidelement(5, 26, SE) aus Hartmetall oder dergleichen eingebettet ist, **dadurch gekennzeichnet, dass** die Stirnseite (S) des Bohrerkopfes (2) eine in Draufsicht trapezförmige oder x-förmige Aufnahmenut (6, 7, N) für das Schneidelement (5, 26, SE) aufweist, wobei die trapezförmige Aufnahmenut (6, N) Bestandteil eines Kreissektors (KS) ist, dessen Mittelpunkt (M_{KS}) außerhalb eines durch einen Nenndurchmesser (D_{N}) definierten Umkreises (U₅) liegt und wobei die x-förmige Aufnahmenut (7) einen Kreuzungs-Mittelpunkt (M_{X}) bildet, der in einem Abstand (q) neben der Bohrerlängsachse (A) liegt und dass ein einstückiges Schneidelement (5, 26, SE) in seiner Außenkontur (K_{T}; K_{X}) der trapezförmigen oder x-förmigen Aufnahmenut (6, 7, N) angepasst ist und wenigstens zwei Schneiden (11; 11a - 11c) aufweist.

2. Gesteinsbohrer nach Anspruch 1, **dadurch gekennzeichnet, dass** die in Draufsicht auf den Bohrerkopf (2) durch die Aufnahmenut (6, N) gebildete trapezähnliche Fläche (T₁) Grundseiten aufweist, welche durch einen kurzen und einen langen Kreisbogen (KB₁, KB₂) gebildet sind, die beide auf einem Umkreis (U₂) des Bohrerkopfes (2) liegen, wobei das Verhältnis der Bogenlänge (l₁) des kurzen Kreisbogens (KB₁) zur Bogenlänge l₂ des langen Kreisbogens (KB₂) 1₂ = 1,5 - 3 x l₁ und insbesondere 1₂ etwa 2 x l₁ beträgt.

3. Bohrwerkzeug nach Anspruch 1 oder 2, **dadurch gekennzeichnet, dass** eine Sekante (b) zur Bogenlänge (l₂) des kurzen Kreisbogens (KB₂) eine Länge (l₃) aufweist, die etwa der Breite einer Schleifscheibe (32) zur Nutenherstellung entspricht.

4. Gesteinsbohrer nach Anspruch 2 oder 3, **dadurch gekennzeichnet, dass** eine Tiefe (t₆) der Aufnahmenut (6) für das Schneidelement (5) etwa der Länge (l₃) der Sekante (b) des kurzen Kreisbogens (KB₂) entspricht.

5. Gesteinsbohrer nach einem der vorhergehenden Ansprüche, **dadurch gekennzeichnet, dass** das einstückige Schneidelement (5, SE) in Draufsicht auf dem Bohrerkopf (2) eine trapezförmige Kontur (K_{T}) aufweist, die der in Draufsicht trapezförmigen Ausbildung (T₁) der Aufnahmenut (6) weitestgehend entspricht.

6. Gesteinsbohrer nach einem der vorhergehenden Ansprüche, **dadurch gekennzeichnet, dass** das trapezförmige Schneidelement (T₂, 5) einem gleichschenkligen Trapez (T_{M}) mit einer kurzen Basisseite (b) und einer gegenüberliegenden langen Basisseite (a) ähnlich ist, wobei die Basisseiten insbesondere durch einen kurzen Kreisbogen (KB₄) und einen langen Kreisbogen (KB₃) gebildet sind, die den Bohrer-Nenndurchmesser (D_{N}) bestimmen, und dass die Seitenschenkel (c, d) des Trapezes (T_{M}) durch Seitenflanken (23a, 23b) gebildet sind und das Schneidelement (T₂, 5) im Bohrerkopf (2) eingebettet sind.

7. Gesteinsbohrer nach einem der vorhergehenden Ansprüche, **dadurch gekennzeichnet, dass** zwei Hauptschneiden (18, 19) diametral gegenüberliegend seitlich etwa parallel zu Seitenflanken (23a, 23b) des Schneidelements (5) angeordnet sind, wobei die Hauptschneiden (18, 19) vorzugsweise eine Länge (m, n) aufweisen, die etwa ¼ bis ½ und insbesondere etwa 1/3 des Bohrer-Nenndurchmessers (D_{N}) entsprechen.

8. Gesteinsbohrer nach Anspruch 7, **dadurch gekennzeichnet, dass** das Schneidelement (5) neben den zwei Hauptschneiden (18, 19) eine dritte Nebenschneide (20) aufweist, die seitlich auf der breiteren Seite (30) des Schneidelements (5) angeordnet ist und die vorzugsweise auf dem gleichen Hüllkegel wie die Hauptschneiden (18, 19) liegt.

9. Gesteinsbohrer nach einem der vorhergehenden Ansprüche, **dadurch gekennzeichnet, dass** die Schneidkante (11a, 11b) wenigstens einer Hauptschneide (18, 19) asymmetrisch derart angeordnet ist, dass diese in ihrer Verlängerung (11a', 11b') die Bohrerachse (A) nicht schneidet.

10. Gesteinsbohrer nach Anspruch 9, **dadurch gekennzeichnet, dass** die dritte Nebenschneide (20) eine Schneidkante (11c) aufweist, die entsprechend der Hauptschneidkante (11a, 11b) asymmetrisch verläuft.

11. Gesteinsbohrer nach einem der vorhergehenden Ansprüche 8 bis 10, **dadurch gekennzeichnet, dass** eine Länge (o) der Schneidkante (11c) der Nebenschneide (20) etwa die Hälfte der Länge (m, n) einer der Hauptschneiden (18, 19) beträgt.

12. Gesteinsbohrer nach Anspruch 8, **dadurch gekennzeichnet, dass** die Nebenschneide (20) als Hartmetallstift ausgebildet ist.

13. Gesteinsbohrer nach einem der vorgenannten Ansprüche, **dadurch gekennzeichnet, dass** zwischen einer Freifläche (15) der ersten Hauptschneide (18) und einer Schneidfläche (13) der zweiten Hauptschneide (19) eine konkave Ausbuchtung (21) mit einer zugehörigen gegenüberliegenden weiteren Ausbuchung (22) angeordnet ist, die zur Bildung einer Bohrerspitze (9) mit verkürzter Querschneide (12) dienen.

14. Gesteinsbohrer nach einem der vorhergehenden Ansprüche, **dadurch gekennzeichnet, dass** das Schneidelement (5, 26) in Seitenansicht auf seine Breitseite (23a, 23b) dachförmig mit einem Spitzenwinkel von ca. 130° ausbildet ist.

15. Gesteinsbohrer nach einem der vorhergehenden Ansprüche, **dadurch gekennzeichnet, dass** das Schneidelement (5, 26) eine mittige, axial vorstehenden Zentrierspitze (9) aufweist.

16. Gesteinsbohrer nach Anspruch 1, **dadurch gekennzeichnet, dass** das x-förmige Schneidelement (26) in Draufsicht zwei trapezförmige Flächen (T_{III}, T_{IV}) mit gemeinsamen schmalen Grundseiten bildet, wobei die gemeinsamen Grundseiten seitlich gegenüber der Bohrerlängsachse (A) versetzt angeordnet sind.

17. Gesteinsbohrer nach Anspruch 1, **dadurch gekennzeichnet, dass** die x-förmige Aufnahmenut (7) in Draufsicht zwei trapezförmige Flächen (T_{I}, T_{II}) mit gemeinsamen schmalen Grundseiten (b₁, b₂) bildet, wobei die gemeinsamen Grundseiten (b₁, b₂) seitlich um einen Abstand (q) gegenüber der Bohrerlängsachse (A) versetzt angeordnet sind.

18. Gesteinsbohrer nach einem der vorhergehenden Ansprüche, **dadurch gekennzeichnet, dass** der Bohrerkopf (2) mit eingebettetem Schneidelement (5, 26) in Draufsicht einen dreieckförmigen bzw. trapezförmigen Querschnitt (T_{BK}) aufweist.

19. Gesteinsbohrer (1) nach Anspruch 1, **gekennzeichnet durch** einen Bohrerkopf (2), einer sich hieran anschließenden ein- oder mehrgängigen Förderwendel (3) sowie einem Einspannschaft (4), wobei der Bohrerkopf (2) eine etwa quer zu einer Längsachse (A) des Gesteinsbohrers (1) verlaufende Aufnahmenut (6, 7, N) aufweist, in welche ein Schneidelement (5, 26, SE) aus Hartmetall oder dergleichen eingebettet ist und wobei die Aufnahmenut (6, 7, N) in der Draufsicht zwei V-förmig ausgerichtete Nutwände (6a, 6b) aufweist und wobei die Nutwände (6a, 6b) als ebene Flächen (K₁, K₂) ausgebildet sind.

20. Gesteinsbohrer (1) nach einem der vorhergehenden Ansprüche, **dadurch gekennzeichnet, dass** die Aufnahmenut (6, 7, N) einen Nutboden (6c) aufweist, welcher senkrecht zur Längsachse (A) des Gesteinsbohrers (1) ausgerichtet ist.

21. Gesteinsbohrer (1) nach einem der vorhergehenden Ansprüche, **dadurch gekennzeichnet, dass** die Aufnahmenut (6, 7, N) einen Nutboden (6c) aufweist, welcher schräg bzw. gekippt zur Längsachse (A) des Gesteinsbohrers (1) ausgerichtet ist.

22. Gesteinsbohrer (1)nach einem der vorhergehenden Ansprüche, **dadurch gekennzeichnet, dass** die Aufnahmenut (6, 7, N) in der Draufsicht als X-förmige Aufnahmenut (7) ausgebildet ist, welche einen Kreuzungspunkt (M_{X}) aufweist, der zur Längsmittelachse (A) des Gesteinsbohrers (1) verschoben ist.

23. Gesteinsbohrer (1) mit einem Bohrerkopf (2), einer sich hieran anschließenden ein- oder mehrgängigen Förderwendel (3) sowie einem Einspannschaft (4), wobei der Bohrerkopf (2) eine etwa quer zu einer Längsachse (A) des Gesteinsbohrers (1) verlaufende Aufnahmenut (6, 7, N) aufweist, in welche ein Schneidelement (5, 26, SE) aus Hartmetall oder dergleichen eingebettet ist, **dadurch gekennzeichnet, dass** das Schneidelement (5, 26, SE) in der Draufsicht aus einer Wirkrichtung (w) des Gesteinsbohrers (1) eine etwa trapezförmige Kontur (K_{T}), mit einem breiten Ende (30) und einem schmalen Ende (31), aufweist.

24. Gesteinsbohrer nach einem der vorhergehenden Ansprüche, **dadurch gekennzeichnet, dass** das Schneidelement (5, 26, SE) drei Schneidkanten (11a, 11b, 11c) aufweist.

25. Gesteinsbohrer nach einem der vorhergehenden Ansprüche, **dadurch gekennzeichnet, dass** zwei Hauptschneiden (18, 19) diametral gegenüberliegend seitlich etwa parallel zu Seitenflanken (23a, 23b) des Schneidelements (5, 26, SE) angeordnet sind, wobei die Hauptschneiden (18, 19) vorzugsweise eine Länge aufweisen, die etwa 1/4 bis 1/2 und insbesondere etwa 1/3 des Bohrer-Nenndurchmessers (D_{N}) entsprechen.

26. Gesteinsbohrer nach einem der vorhergehenden Ansprüche, **dadurch gekennzeichnet, dass** das Schneidelement (5, 26, SE) neben den zwei Hauptschneiden (18, 19) eine dritte Nebenschneide (20) aufweist, die seitlich auf der breiteren Seite des Schneidelements (5, 26, SE) angeordnet ist und die vorzugsweise auf dem gleichen Hüllkegel wie die Hauptschneiden (18, 19) liegt.

27. Gesteinsbohrer nach einem der vorhergehenden Ansprüche, **dadurch gekennzeichnet, dass** die Schneidkante (11a, 11b) wenigstens einer Hauptschneide (18, 19) asymmetrisch derart angeordnet ist, dass diese in ihrer Verlängerung die Bohrerachse (A) nicht schneidet.

28. Gesteinsbohrer nach einem der vorhergehenden Ansprüche, **dadurch gekennzeichnet, dass** die dritte Nebenschneide (20) eine Schneidkante (11c) aufweist, die entsprechend der Hauptschneidkante (11a, 11b) asymmetrisch verläuft.

29. Gesteinsbohrer nach einem der vorhergehenden Ansprüche, **dadurch gekennzeichnet, dass** die Nebenschneidkante (11c) kürzer ist als einer der Hauptschneidkanten (11a, 11b), wobei das Längenverhältnis kleiner 1:2 ist.

30. Gesteinsbohrer, nach Anspruch 1, **dadurch gekennzeichnet, dass** das Schneidelement (5, 26, SE) in der Draufsicht aus einer Wirkrichtung (w) des Gesteinsbohrers (1) eine etwa X-förmige Kontur (K_{X}) aufweist und außermittig zur Längsachse (A) des Gesteinsbohrers (1) angeordnet ist.

31. Gesteinsbohrer nach einem der vorhergehenden Ansprüche, **dadurch gekennzeichnet, dass** die Aufnahmenut (6, 7, N) durch zwei Bearbeitungsschritte mit der Schleifscheibe (32) herstellbar ist.

## Claims

1. Masonry drill (1) having a drill head (2), an adjoining single- or multi-start conveying helix (3), and a clamping shank (4), a cutting element (5, 26, SE) of carbide or the like being embedded in the drill head (2), **characterized in that** the front end (S) of the drill head (2) has a locating groove (6, 7, N), trapezoidal or x-shaped in plan view, for the cutting element (5, 26, SE), the trapezoidal locating groove (6, N) being part of a circular sector (KS), the centre point (M_{KS}) of which lies outside a circumcircle (U₅) defined by a nominal diameter (D_{N}), and the x-shaped locating groove (7) forming an intersection centre point (M_{X}) which lies at a distance (q) from the drill longitudinal axis (A), and **in that** a one-piece cutting element (5, 26, SE) is adapted in its outer contour (K_{T}; K_{X}) to the trapezoidal or x-shaped locating groove (6, 7, N) and has at least two cutting edges (11; 11a - 11c).

2. Masonry drill according to Claim 1, **characterized in that** the trapezium-like area (T₁) formed in plan view of the drill head (2) by the locating groove (6, N) has base sides which are formed by a long and a short circular arc (KB₁, KB₂), which both lie on a circumcircle (U₂) of the drill head (2), the ratio of the arc length (l₁) of the long circular arc (KB₁) to the arc length (l₂) of the short circular arc (KB₂) being 1₁ = 1.5 - 3 x 1₂ and in particular 1₁ being approximately 2 x 1₂.

3. Drilling tool according to Claim 1 or 2, **characterized in that** a secant (b) relative to the arc length (l₂) of the short circular arc (KB₂) has a length (l₃) which corresponds approximately to the width of a grinding wheel (32) for producing grooves.

4. Masonry drill according to Claim 2 or 3, **characterized in that** a depth (t₆) of the locating groove (6) for the cutting element (5) corresponds approximately to the length (l₃) of the secant (b) of the short circular arc (KB₂).

5. Masonry drill according to one of the preceding claims, **characterized in that** the one-piece cutting element (5, SE), in plan view of the drill head (2), has a trapezoidal contour (K_{T}) which corresponds to the trapezoidal design (T₁) in plan view of the locating groove (6) to the greatest possible extent.

6. Masonry drill according to one of the preceding claims, **characterized in that** the trapezoidal cutting element (T₂, 5) is similar to an equilateral trapezium (T_{M}) having a short base side (b) and an opposite long base side (a), the base sides being formed in particular by a short circular arc (KB₄) and a long circular arc (KB₃), which determine the drill nominal diameter (D_{N}), and **in that** the side legs (c, d) of the trapezium (T_{M}) are formed by side faces (23a, 23b), and the cutting element (T₂, 5) is embedded in the drill head (2).

7. Masonry drill according to one of the preceding claims, **characterized in that** two main lips (18, 19) are arranged laterally diametrically opposite one another approximately parallel to side faces (23a, 23b) of the cutting element (5), the main lips (18, 19) preferably having a length (m, n) which corresponds approximately to ¼ to ½ and in particular approximately to 1/3 of the drill nominal diameter (D_{N}).

8. Masonry drill according to Claim 7, **characterized in that** the cutting element (5), in addition to the two main lips (18, 19), has a third, secondary lip (20) which is arranged laterally on the wider side (30) of the cutting element (5) and which preferably lies on the same envelope cone as the main lips (18, 19).

9. Masonry drill according to one of the preceding claims, **characterized in that** the cutting edge (11a, 11b) of at least one main lip (18, 19) is arranged asymmetrically in such a way that said cutting edge (11a, 11b), in its extension (11a', 11b'), does not intersect the drill axis (A).

10. Masonry drill according to Claim 9, **characterized in that** the third, secondary lip (20) has a cutting edge (11c) which runs asymmetrically in accordance with the main cutting edge (11a, 11b).

11. Masonry drill according to one of the preceding Claims 8 to 10, **characterized in that** a length (o) of the cutting edge (11c) of the secondary lip (20) is approximately half the length (m, n) of one of the main lips (18, 19).

12. Masonry drill according to Claim 8, **characterized in that** the secondary lip (20) is designed as a carbide pin.

13. Masonry drill according to one of the aforesaid claims, **characterized in that** a concave bulge (21) together with an associated opposite further bulge (22) is arranged between a flank (15) of the first main lip (18) and a cutting face (13) of the second main lip (19), said bulges (21, 22) serving to form a drill point (9) with shortened chisel edge (12).

14. Masonry drill according to one of the preceding claims, **characterized in that** the cutting element (5, 26), in a side view of its wide side (23a, 23b), is of roof-shaped design with a point angle of about 130°.

15. Masonry drill according to one of the preceding claims, **characterized in that** the cutting element (5, 26) has a central, axially projecting centring point (9).

16. Masonry drill according to Claim 1, **characterized in that** the x-shaped cutting element (26), in plan view, forms two trapezoidal areas (T_{III}, T_{IV}) having common narrow base sides, the common base sides being arranged laterally offset relative to the drill longitudinal axis (A).

17. Masonry drill according to Claim 1, **characterized in that** the x-shaped locating groove (7), in plan view, forms two trapezoidal areas (T_{I}, T_{II}) having common narrow base sides (b₁, b₂), the common base sides (b₁, b₂) being arranged laterally offset relative to the drill longitudinal axis (A) by a distance (q).

18. Masonry drill according to one of the preceding claims, **characterized in that** the drill head (2) together with embedded cutting element (5, 26), in plan view, has a triangular or trapezoidal cross section (T_{BK}).

19. Masonry drill (1) according to Claim 1, **characterized by** a drill head (2), an adjoining single- or multi-start conveying helix (3), and a clamping shank (4), the drill head (2) having a locating groove (6, 7, N) which runs approximately transversely to a longitudinal axis (A) of the masonry drill (1) and in which a cutting element (5, 26, SE) of carbide or the like is embedded, and the locating groove (6, 7, N), in plan view, having two groove walls (6a, 6b) oriented in a V shape, and the groove walls (6a, 6b) being designed as flat surfaces (K₁, K₂).

20. Masonry drill (1) according to one of the preceding claims, **characterized in that** the locating groove (6, 7, N) has a groove root (6c) which is oriented perpendicularly to the longitudinal axis (A) of the masonry drill (1).

21. Masonry drill (1) according to one of the preceding claims, **characterized in that** the locating groove (6, 7, N) has a groove root (6c) which is oriented obliquely or so as to be tilted relative to the longitudinal axis (A) of the masonry drill (1).

22. Masonry drill (1) according to one of the preceding claims, **characterized in that** the locating groove (6, 7, N), in plan view, is designed as an x-shaped locating groove (7) which has an intersection point (Mₓ) which is displaced relative to the longitudinal centre axis (A) of the masonry drill (1).

23. Masonry drill (1) having a drill head (2), an adjoining single- or multi-start conveying helix (3), and a clamping shank (4), the drill head (2) having a locating groove (6, 7, N) which runs approximately transversely to a longitudinal axis (A) of the masonry drill (1) and in which a cutting element (5, 26, SE) of carbide or the like is embedded, **characterized in that** the cutting element (5, 26, SE), in plan view from an effective direction (w) of the masonry drill (1), has an approximately trapezoidal contour (K_{T}) with a wide end (30) and a narrow end (31).

24. Masonry drill according to one of the preceding claims, **characterized in that** the cutting element (5, 26, SE) has three cutting edges (11a, 11b, 11c).

25. Masonry drill according to one of the preceding claims, **characterized in that** two main lips (18, 19) are arranged laterally diametrically opposite one another approximately parallel to side faces (23a, 23b) of the cutting element (5, 26, SE), the main lips (18, 19) preferably having a length which corresponds approximately to ¼ to ½ and in particular approximately to 1/3 of the drill nominal diameter (D_{N}).

26. Masonry drill according to one of the preceding claims, **characterized in that** the cutting element (5, 26, SE), in addition to the two main lips (18, 19), has a third, secondary lip (20) which is arranged laterally on the wider side of the cutting element (5, 26, SE) and which preferably lies on the same envelope cone as the main lips (18, 19).

27. Masonry drill according to one of the preceding claims, **characterized in that** the cutting edge (11a, 11b) of at least one main lip (18, 19) is arranged asymmetrically in such a way that said cutting edge (11a, 11b), in its extension, does not intersect the drill axis (A) .

28. Masonry drill according to one of the preceding claims, **characterized in that** the third, secondary lip (20) has a cutting edge (11c) which runs asymmetrically in accordance with the main cutting edge (11a, 11b).

29. Masonry drill according to one of the preceding claims, **characterized in that** the secondary cutting edge (11c) is shorter than one of the main cutting edges (11a, 11b), the length ratio being less than 1:2.

30. Masonry drill according to Claim 1, **characterized in that** the cutting element (5, 26, SE), in plan view from an effective direction (w) of the masonry drill (1), has an approximately X-shaped contour (K_{X}) and is arranged eccentrically to the longitudinal axis (A) of the masonry drill (1).

31. Masonry drill according to one of the preceding claims, **characterized in that** the locating groove (6, 7, N) can be produced by two machining steps with the grinding wheel (32).

## Revendications

1. Foret à roche (1) avec une tête de foret (2), une hélice d'extraction (3) à filet simple ou multiple qui s'y raccorde, ainsi qu'un manche de serrage (4), avec un élément de coupe (5, 26, SE) en métal dur ou matériau analogue encastré dans la tête de foret (2),
**caractérisé en ce que**
le côté frontal (S) de la tête de foret (2) présente en vue de dessus une rainure de logement trapézoïdale ou en forme de x, (6, 7, N), pour l'élément de coupe (5, 26, SE), la rainure trapézoïdale (6, N) faisant partie d'un secteur de cercle (KS), dont le centre (M_{KS}) se trouve en dehors d'un pourtour (U₅) défini par un diamètre nominal (D_{N}) alors que la rainure de logement en forme de x (7) crée un centre de croisement (Mx) situé à une distance (q) à côté de l'axe longitudinal du foret (A), et un élément de coupe monobloc (5, 26, SE) a son contour extérieur (K_{T} ; Kₓ) adapté à la rainure de logement trapézoïdale ou en forme de x (6, 7, N) et présente au moins deux tranchants (11 ; 11a - 11c).

2. Foret à roche selon la revendication 1,
**caractérisé en ce que**
la surface trapézoïdale (T₁) formée, en vue de dessus, sur la tête de foret (2), par la rainure de logement (6, N), possède des côtés de base, formés par un arc de cercle court et un arc de cercle long (KB₁, KB₂), qui se trouvent tous les deux sur un pourtour (U₂) de la tête de foret (2), le rapport de la longueur d'arc (1₁) de l'arc de cercle court (KB₁) à la longueur d'arc (1₂) de l'arc de cercle long (KB₂) étant de 1₂ = (1,5 à 3) x 1₁, et en particulier 1₂ = à peu près 2 x 1₁.

3. Outil de forage selon la revendication 1 ou 2,
**caractérisé en ce qu'**
une sécante (b) sur la longueur d'arc (1₂) de l'arc de cercle court (KB₂) possède une longueur (l₃) qui correspond à peu près à la largeur d'une meule (32) pour la réalisation de la rainure.

4. Foret à roche selon la revendication 2 ou 3,
**caractérisé en ce qu'**
une profondeur (t₆) de la rainure de logement (6) pour l'élément de coupe (5) correspond à peu près à la longueur (l₃) de la sécante (b) de l'arc de cercle court (KB₂).

5. Foret à roche selon l'une des revendications précédentes,
**caractérisé en ce que**
l'élément de coupe monobloc (5, SE), en vue de dessus, sur la tête de foret (2), possède un contour trapézoïdal (K_{T}), qui correspond dans la plus large mesure à la forme trapézoïdale en vue de dessus (T₁) de la rainure de logement (6).

6. Foret à roche selon l'une des revendications précédentes,
**caractérisé en ce que**
l'élément de coupe trapézoïdal (T₂, 5) est analogue à un trapèze isocèle (T_{M}) avec une base courte (b) et une base longue (a) opposée, les bases étant formées en particulier par un arc de cercle court (KB₄) et un arc de cercle long (KB₃) qui déterminent le diamètre nominal du foret (D_{N}), les côtés latéraux (c, d) du trapèze (T_{M}) sont formés par des flancs latéraux (23a, 23b), et l'élément de coupe (T₂, 5) est encastré dans la tête de foret (2).

7. Foret à roche selon l'une des revendications précédentes,
**caractérisé en ce que**
deux tranchants principaux (18, 19), diamétralement opposés, sont disposés latéralement, à peu près parallèlement aux flancs latéraux (23a, 23b) de l'élément de coupe (5), les tranchants principaux (18, 19) possèdant de préférence une longueur (m, n) qui correspond à peu près à ¼ à ½, et en particulier à peu près à 1/3 du diamètre nominal du foret (D_{N}).

8. Foret à roche selon la revendication 7,
**caractérisé en ce que**
l'élément de coupe (5), en dehors des deux tranchants principaux (18, 19), possède un troisième tranchant, secondaire (20), qui est disposé latéralement sur le côté le plus large (30) de l'élément de coupe (5) et qui se trouve de préférence sur le même cône d'enveloppe que les tranchants principaux (18, 19).

9. Foret à roche selon l'une des revendications précédentes,
**caractérisé en ce que**
l'arête de coupe (11a, 11b) d'au moins un tranchant principal (18, 19) est disposée asymétriquement de sorte que son prolongement (11a', 11b') ne coupe pas l'axe (A) du foret.

10. Foret à roche selon la revendication 9,
**caractérisé en ce que**
le troisième tranchant secondaire (20) possède une arête de coupe (11c), qui court asymétriquement suivant l'arête de coupe principale (11a, 11b).

11. Foret à roche selon l'une des revendications précédentes 8 à 10,
**caractérisé en ce qu'**
une longueur (o) de l'arête de coupe (11c) du tranchant secondaire (20) est environ la moitié de la longueur (m, n) d'un des tranchants principaux (18, 19).

12. Foret à roche selon la revendication 8,
**caractérisé en ce que**
le tranchant secondaire (20) est une tige de métal dur.

13. Foret à roche selon l'une des revendications précédentes,
**caractérisé en ce qu'**
entre une dépouille (15) du premier tranchant principal (18) et une surface de coupe (13) du deuxième tranchant principal (19), une courbure concave (21) et une autre courbure (22) correspondante opposée, servent à la formation d'une pointe de foret (9) à tranchant transversal raccourci (12).

14. Foret à roche selon l'une des revendications précédentes,
**caractérisé en ce que**
l'élément de coupe (5, 26), en vue latérale, sur son côté large (23a, 23b), a la forme d'un toit avec un angle de faîte d'environ 130°.

15. Foret à roche selon l'une des revendications précédentes,
**caractérisé en ce que**
l'élément de coupe (5, 26) possède une pointe de centrage (9) centrale, saillant axialement.

16. Foret à roche selon la revendication 1,
**caractérisé en ce que**
l'élément de coupe en forme de x (26), en vue de dessus, forme deux surfaces trapézoïdales (T_{III}, T_{IV}) avec des côtés de base étroits communs, les côtés de base communs étant disposés latéralement, décalés par rapport à l'axe longitudinal (A) du foret.

17. Foret à roche selon la revendication 1,
**caractérisé en ce que**
la rainure de logement en forme de x (7), en vue de dessus, forme deux surfaces trapézoïdales (T_{I}, T_{II}) avec les côtés de base étroits communs (b₁, b₂), les côtés de base communs (b₁, b₂) étant disposés latéralement à une distance (q) par rapport à l'axe longitudinal (A) du foret.

18. Foret à roche selon l'une des revendications précédentes,
**caractérisé en ce que**
la tête de foret (2) avec éléments de coupe encastrés (5, 26), en vue de dessus, possède une section triangulaire ou trapézoïdale (T_{BK}).

19. Foret à roche (1) selon la revendication 1,
**caractérisé par**
une tête de foret (2), une hélice d'extraction (3) à filet simple ou multiple qui s'y raccorde, ainsi qu'un manche de serrage (4), dans lequel la tête de foret (2) présente une rainure de logement (6, 7, N) courant à peu près transversalement à un axe longitudinal (A) du foret à roche (1), et dans laquelle un élément de coupe (5, 26, SE) en métal dur ou matériau de ce genre est encastré, la rainure de logement (6, 7, N) ayant en vue de dessus, deux parois de rainure orientées en forme de V (6a, 6b), et les parois de rainure (6a, 6b) ayant la forme de surfaces planes (K₁, K₂).

20. Foret à roche (1) selon l'une des revendications précédentes,
**caractérisé en ce que**
la rainure de logement (6, 7, N) possède un fond de rainure (6c), orienté perpendiculairement à l'axe longitudinal (A) du foret de roche (1).

21. Foret à roche (1) selon l'une des revendications précédentes,
**caractérisé en ce que**
la rainure de logement (6, 7, N) possède un fond de rainure (6c), orienté en oblique ou basculé par rapport à l'axe longitudinal (A) du foret à roche (1).

22. Foret à roche (1) selon l'une des revendications précédentes,
**caractérisé en ce que**
la rainure de logement (6, 7, N), en vue de dessus, est configurée comme une rainure de logement en forme de X (7), qui possède un point de croisement (Mx), déplacé vers l'axe longitudinal moyen (A) du foret à roche.

23. Foret à roche (1) avec une tête de foret (2), une hélice d'extraction (3) à filet simple ou multiple qui s'y raccorde, ainsi qu'un manche de serrage (4), la tête de foret (2) présentant une rainure de logement (6, 7, N) courant à peu près transversalement à un axe longitudinal (A) du foret à roche (1), dans laquelle un élément de coupe (5, 26, SE) en métal dur ou matériau de ce genre est encastré, **caractérisé en ce que** l'élément de coupe (5, 26, SE), en vue de dessus d'une direction de travail (w) du foret à roche (1), possède un contour à peu près trapézoïdal (K_{T}), avec une extrémité large (30) et une extrémité étroite (31).

24. Foret à roche selon l'une des revendications précédentes,
**caractérisé en ce que**
l'élément de coupe (5, 26, SE) possède trois arêtes de coupe (11a, 11b, 11c).

25. Foret à roche selon l'une des revendications précédentes,
**caractérisé en ce que**
deux tranchants principaux (18, 19) opposés sont disposés latéralement, à peu près parallèlement aux flancs latéraux (23a, 23b) de l'élément de coupe (5, 26, SE), les tranchants principaux (18, 19) possèdant de préférence une longueur qui correspond à peu près à ¼ à ½, et en particulier à peu près à 1/3 du diamètre nominal du foret (D_{N}).

26. Foret à roche selon l'une des revendications précédentes,
**caractérisé en ce que**
l'élément de coupe (5, 26, SE) possède outre les deux tranchants principaux (18, 19), un troisième tranchant, secondaire (20), qui est disposé latéralement sur le côté le plus large (30) de l'élément de coupe (5, 26, SE) et qui se trouve de préférence sur le même cône d'enveloppe que les tranchants principaux (18, 19).

27. Foret à roche selon l'une des revendications précédentes,
**caractérisé en ce que**
l'arête de coupe (11a, 11b) d'au moins un tranchant principal (18, 19) est disposée asymétriquement de sorte que son prolongement ne coupe pas l'axe (A) du foret.

28. Foret à roche selon l'une des revendications précédentes,
**caractérisé en ce que**
le troisième tranchant secondaire (20) possède une arête de coupe (11c), qui court asymétriquement suivant l'arête de coupe principale (11a, 11b).

29. Foret à roche selon l'une des revendications précédentes,
**caractérisé en ce que**
l'arête de coupe secondaire (11c) est plus courte que l'une des arêtes de coupe principales (11a, 11b), le rapport des longueurs étant inférieur à 1/2.

30. Foret à roche selon la revendication 1,
**caractérisé en ce que**
l'élément de coupe (5, 26, SE), en vue de dessus selon une direction de travail (w) du foret à roche (1), présente un contour à peu près en forme de X (Kx), et est excentré sur l'axe longitudinal (A) du foret à roche (1).

31. Foret à roche selon l'une des revendications précédentes,
**caractérisé en ce que**
la rainure de logement (6, 7, N) peut être réalisée en deux étapes d'usinage par la meule (32).
